# EUROPEAN PATENT APPLICATION

(11) **EP 4 790 514 A1**
(43) Date of publication of application: **12.08.2026**
(21) Application number: 23954730.0
(22) Date of filing: 03.10.2023
(51) Int. Cl.: G06F 1/16, G06F 1/18

(54) **CRADLE AND ELECTRONIC DEVICE**

(71) Applicant: Nintendo Co., Ltd., Kyoto-shi, Kyoto 601-8501 (JP)
(72) Inventor: MORITA, Kensuke, Kyoto-shi, Kyoto 601-8501 (JP); HIROSE, Shinji, Kyoto-shi, Kyoto 601-8501 (JP); FURUIKE, Hironori, Kyoto-shi, Kyoto 601-8501 (JP); IKUTA, Hiroki, Kyoto-shi, Kyoto 601-8501 (JP)
(74) Representative: Bardehle Pagenberg Partnerschaft mbB Patentanwälte Rechtsanwälte
(86) International application number: PCT/JP2023/036119
(87) International publication number: WO 2025/074518

(57) **Abstract**

Cradle and electronic device can reduce misalignment between cradle and electronic device. Cradle can support electronic device. Electronic device includes body having front surface, back surface spaced from front surface, side surface connecting front surface and back surface, and recess being open in back surface and side surface, and stand on back surface. Stand is movable between first orientation in which stand is adjacent to back surface and second orientation in which stand is farther from back surface. Stand includes cover to cover at least part of recess when stand is in first orientation. Cradle includes housing having facing surface and bottom surface, and protrusion protruding from bottom surface and located away from facing surface in depth direction. When cradle supports electronic device, facing surface faces back surface in depth direction and bottom surface faces side surface. When cradle supports electronic device, protrusion is in recess and cover is in clearance between protrusion and facing surface.

## Description

### TECHNICAL FIELD

The present disclosure relates to a cradle and an electronic device supportable by the cradle.

### BACKGROUND ART

A device holder that can support an electronic device is described in Patent Document 1 as an example of the cradle.

### PRIOR ART DOCUMENTS

### PATENT LITERATURE

Patent Literature 1: JP-A-2022-182852

### SUMMARY OF THE INVENTION

### PROBLEMS TO BE SOLVED BY THE INVENTION

Cradles and electronic devices are to be improved to reduce misalignment between a cradle and an electronic device being supported by the cradle.

In response to the above issue, one or more aspects of the present disclosure are directed to a cradle and an electronic device that can reduce misalignment between the cradle and the electronic device being supported by the cradle.

### SOLUTIONS TO THE PROBLEMS

In response to the above, a cradle according to one or more aspects of the present disclosure supports an electronic device. The electronic device includes a body having a front surface, a back surface spaced from the front surface and facing away from the front surface, a side surface connecting the front surface and the back surface, and a recess located at a boundary between the back surface and the side surface and being open in the back surface and the side surface, a display on the front surface, a first connector on the side surface, and a stand on the back surface. The stand is movable between a first orientation in which the stand is adjacent to the back surface and a second orientation in which the stand is farther from the back surface than in the first orientation. The stand includes a cover to cover at least a part of the recess when the stand is in the first orientation. The cradle includes a second connector connectable to the first connector of the electronic device being supported by the cradle, a housing having a facing surface to face, in a depth direction, the back surface of the body of the electronic device being supported by the cradle, and a bottom surface to face the side surface of the body of the electronic device being supported by the cradle, and a protrusion protruding from the bottom surface and located away from the facing surface in the depth direction. When the cradle supports the electronic device, the protrusion is in the recess on the body of the electronic device and the cover in the stand in the first orientation in the electronic device is in a clearance between the protrusion and the facing surface in the depth direction.

An electronic device according to one or more aspects of the present disclosure is supportable by a cradle. The electronic device includes a body having a front surface, a back surface spaced from the front surface and facing away from the front surface, a side surface connecting the front surface and the back surface, and a recess located at a boundary between the back surface and the side surface and being open in the back surface and the side surface, a display on the front surface, a first connector on the side surface, and a stand on the back surface. The stand is movable between a first orientation in which the stand is adjacent to the back surface and a second orientation in which the stand is farther from the back surface than in the first orientation. The stand includes a cover to cover at least a part of the recess when the stand is in the first orientation. When the electronic device is supported by the cradle, the first connector is connected to a second connector included in the cradle, the recess receives a protrusion included in the cradle, and the cover in the stand in the first orientation covers at least a part of the protrusion in the recess.

### EFFECTS OF THE INVENTION

The cradle and the electronic device according to the above aspects of the present disclosure can reduce misalignment between the cradle and the electronic device being supported by the cradle.

### BRIEF DESCRIPTION OF THE DRAWINGS

Fig. 1 is a schematic front view of a cradle and an electronic device according to an embodiment of the present disclosure.
Fig. 2 is a schematic side view of the cradle according to the embodiment of the present disclosure.
Fig. 3 is a schematic plan view of the cradle according to the embodiment of the present disclosure.
Fig. 4 is a cross-sectional view taken along line IV-IV in Fig. 3.
Fig. 5 is an exploded cross-sectional view of the cradle in Fig. 4.
Fig. 6 is an enlarged view of the portion enclosed by the dashed line in Fig. 4.
Fig. 7 is a schematic perspective view of the electronic device according to the embodiment of the present disclosure.
Fig. 8 is a schematic perspective view of the electronic device in Fig. 7, with a stand removed.
Fig. 9 is a schematic side view of the electronic device according to the embodiment of the present disclosure.
Fig. 10 is a schematic side view of the cradle and the electronic device, illustrating the placement of the electronic device into the cradle.
Fig. 11 is a schematic side view of the cradle and an electronic device, illustrating the placement of the electronic device into the cradle.
Fig. 12 is a schematic side view of a cradle and the electronic device, illustrating the placement of the electronic device into the cradle.
Fig. 13 is a schematic perspective view of an electronic device according to a modification of the embodiment of the present disclosure.

### DETAILED DESCRIPTION

A cradle according to a first aspect of the present disclosure supports an electronic device. The electronic device includes a body having a front surface, a back surface spaced from the front surface and facing away from the front surface, a side surface connecting the front surface and the back surface, and a recess located at a boundary between the back surface and the side surface and being open in the back surface and the side surface, a display on the front surface, a first connector on the side surface, and a stand on the back surface. The stand is movable between a first orientation in which the stand is adjacent to the back surface and a second orientation in which the stand is farther from the back surface than in the first orientation. The stand includes a cover to cover at least a part of the recess when the stand is in the first orientation. The cradle includes a second connector connectable to the first connector of the electronic device being supported by the cradle, a housing having a facing surface to face, in a depth direction, the back surface of the body of the electronic device being supported by the cradle, and a bottom surface to face the side surface of the body of the electronic device being supported by the cradle, and a protrusion protruding from the bottom surface and located away from the facing surface in the depth direction. When the cradle supports the electronic device, the protrusion is in the recess on the body of the electronic device and the cover in the stand in the first orientation in the electronic device is in a clearance between the protrusion and the facing surface in the depth direction.

A cradle according to a second aspect of the present disclosure is the cradle according to the first aspect further including a pair of projections protruding from the bottom surface. The pair of projections are placeable in respective two recessed portions on the side surface of the body of the electronic device being supported by the cradle. The pair of projections are located with the second connector between the pair of projections in a width direction intersecting with the depth direction and extending along the bottom surface. Each of the pair of projections includes a first slope and a second slope facing the other of the pair of projections in the width direction. The first slope of each of the pair of projections is located adjacent to a basal end of a corresponding projection of the pair of projections and is inclined at an obtuse angle with respect to the bottom surface. The second slope of each of the pair of projections is located adjacent to a distal end of a corresponding projection of the pair of projections, is continuous with the first slope of the corresponding projection, and is inclined at an obtuse angle with respect to the bottom surface. The second slope has a greater angle with respect to the bottom surface than the first slope.

A cradle according to a third aspect of the present disclosure is the cradle according to the first aspect or the second aspect further including a support supporting the protrusion from a position adjacent to the bottom surface. The protrusion has two side surfaces in a width direction intersecting with the depth direction and extending along the bottom surface. Each of the two side surfaces includes, at a boundary of the side surface with the support, a boundary surface inclined with respect to the bottom surface to cause the protrusion to have a larger dimension in the width direction toward the support.

A cradle according to a fourth aspect of the present disclosure is the cradle according to any one of the first to third aspects in which the protrusion is a separate component from the housing. A material for the protrusion has a lower coefficient of friction than a material for the housing adjacent to the protrusion.

A cradle according to a fifth aspect of the present disclosure is the cradle according to any one of the first to fourth aspects in which the protrusion has a larger dimension than the second connector in a width direction intersecting with the depth direction and extending along the bottom surface.

An electronic device according to a sixth aspect of the present disclosure is supportable by a cradle. The electronic device includes a body having a front surface, a back surface spaced from the front surface and facing away from the front surface, a side surface connecting the front surface and the back surface, and a recess located at a boundary between the back surface and the side surface and being open in the back surface and the side surface, a display on the front surface, a first connector on the side surface, and a stand on the back surface. The stand is movable between a first orientation in which the stand is adjacent to the back surface and a second orientation in which the stand is farther from the back surface than in the first orientation. The stand includes a cover to cover at least a part of the recess when the stand is in the first orientation. When the electronic device is supported by the cradle, the first connector is connected to a second connector included in the cradle, the recess receives a protrusion included in the cradle, and the cover in the stand in the first orientation covers at least a part of the protrusion in the recess.

An electronic device according to a seventh aspect of the present disclosure is the electronic device according to the sixth aspect in which the body has an internal space. The recess is unconnected with the internal space.

An electronic device according to an eighth aspect of the present disclosure is the electronic device according to the sixth aspect or the seventh aspect in which the stand includes a pivotally movable distal portion to be adjacent to the side surface when the stand is in the first orientation. The pivotally movable distal portion has a cutout cut toward a pivotally movable basal portion of the stand. The cutout overlaps the recess when viewed in a direction perpendicular to the side surface.

An electronic device according to a ninth aspect of the present disclosure is the electronic device according to any one of the sixth to eighth aspects in which the recess has a larger dimension than the first connector in a width direction intersecting with the front surface and extending along the side surface.

An electronic device according to a tenth aspect of the present disclosure is the electronic device according to any one of the sixth to ninth aspects in which the recess has a chamfered inner edge.

Embodiments of the present invention will now be described with reference to the drawings. The present invention is not limited to the embodiments. In the drawings, like reference numerals denote substantially the same components.

For ease of explanation, directional terms such as up, down, lateral, vertical, and height are used herein to describe the components in typical use. These terms are not intended to limit the use or other situations of a cradle and an electronic device according to one or more embodiments of the present invention.

### (Embodiments)

The structures of a cradle and an electronic device according to an embodiment of the present disclosure will now be described.

The cradle according to the embodiment of the present disclosure can support an electronic device and is electrically connected to the electrical device on the cradle. The cradle according to the embodiment of the present disclosure can function as a charger that charges the electronic device on the cradle. The cradle according to the embodiment of the present disclosure can extend the capabilities of the electronic device on the cradle. For example, the extended capabilities of the electronic device include connection of the electronic device to a wired local area network (LAN) with the cradle. The extended capabilities of the electronic device also include, for example, allowing images on a display of the electronic device to be displayed on an external display connected to the cradle.

The electronic device according to the embodiment of the present disclosure is, for example, a game device, a smartphone, or a personal computer. An electronic device support system according to an embodiment of the present disclosure includes the cradle and the electronic device described above. For example, the electronic device support system includes a game device as the electronic device and the cradle that can support the game device.

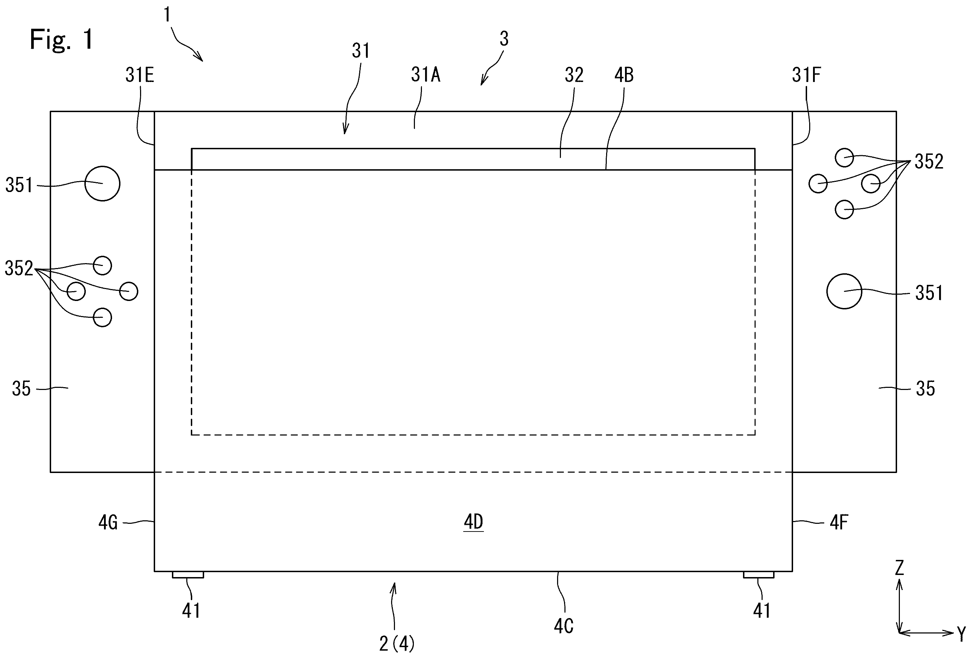

Fig. 1 is a schematic front view of the cradle and the electronic device according to the embodiment of the present disclosure.

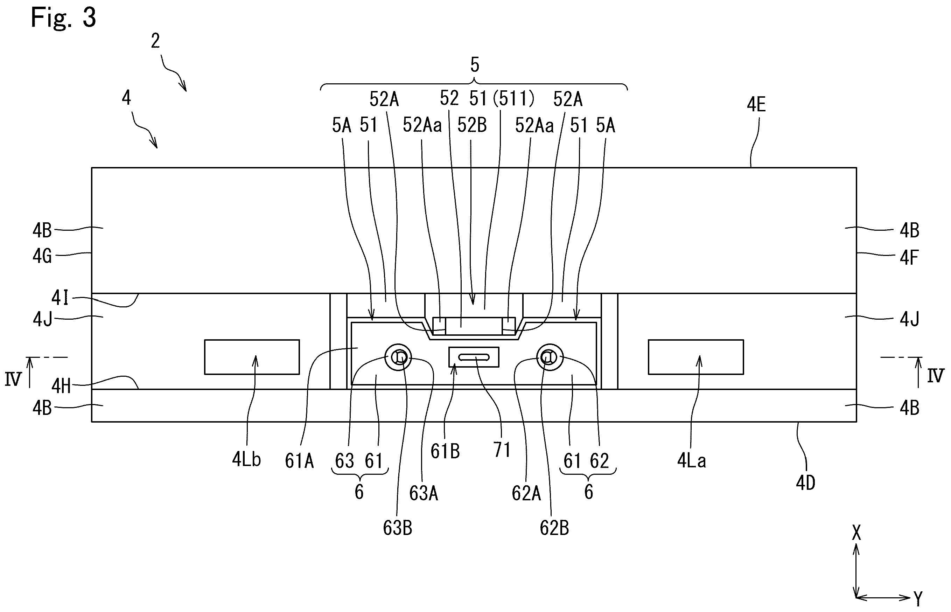

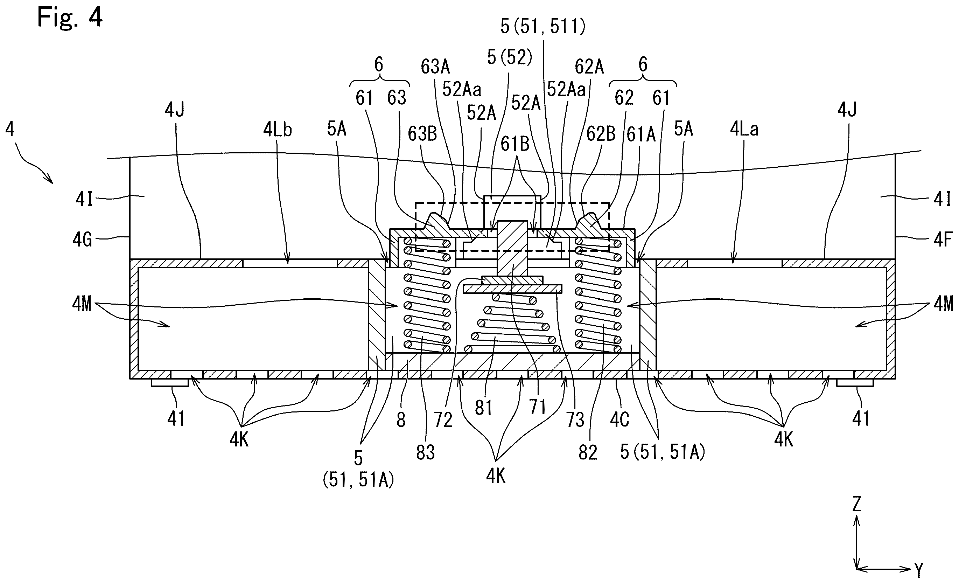

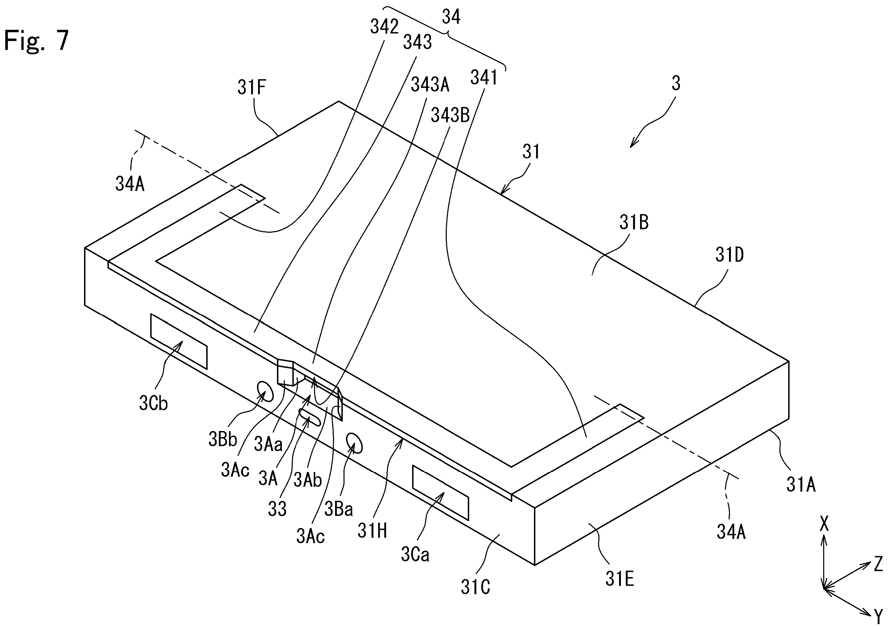

As shown in Fig. 1, an electronic device support system 1 includes a cradle 2 and an electronic device 3. The cradle 2 can support the electronic device 3. In Fig. 1, the cradle 2 supports the electronic device 3. The electronic device 3 includes a first connector 33 (refer to Fig. 7). The cradle 2 includes a second connector 71 (refer to Figs. 3 and 4). The first connector 33 and the second connector 71 are connected to each other when the cradle 2 supports the electronic device 3. This electrically connects the cradle 2 and the electronic device 3.

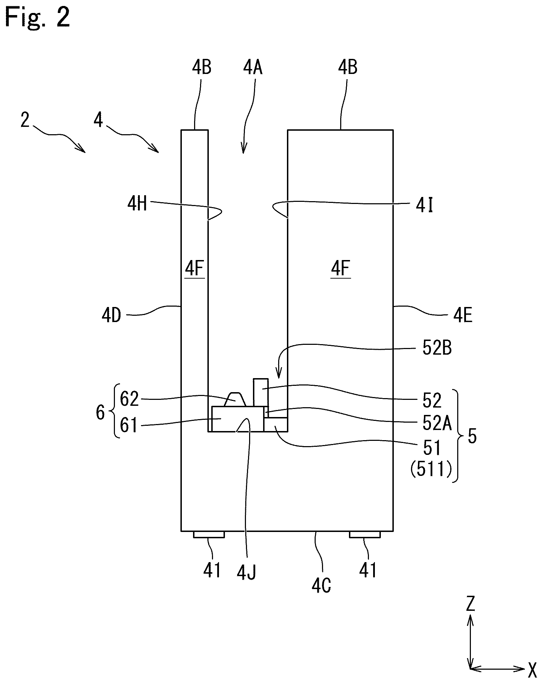

For ease of explanation, the electronic device support system 1 has a depth direction referred to as the X-direction, a width direction as the Y-direction, and a height direction as the Z-direction herein and in the drawings. The X-direction, the Y-direction, and the Z-direction are perpendicular to one another. In the Z-direction, a portion adjacent to the bottom of a groove 4A (refer to Fig. 2) on a housing 4 of the cradle 2 is a lower portion, and a portion adjacent to the opening (opposite to the bottom) of the groove 4A is an upper portion.

The structure of the cradle 2 will now be described.

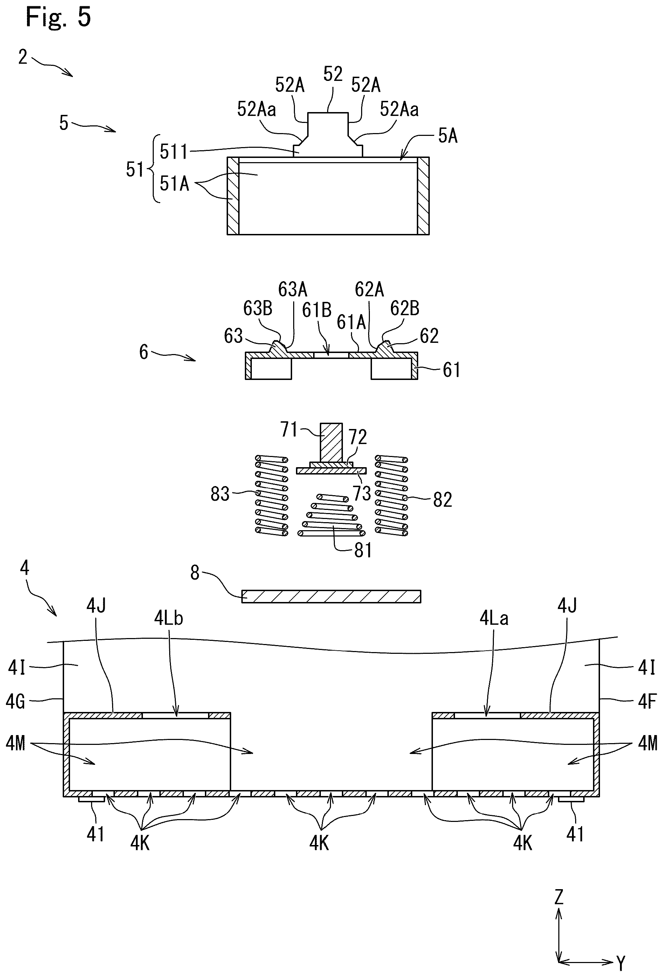

Fig. 2 is a schematic side view of the cradle according to the embodiment of the present disclosure. Fig. 3 is a schematic plan view of the cradle according to the embodiment of the present disclosure. Fig. 4 is a cross-sectional view taken along line IV-IV in Fig. 3. Fig. 5 is an exploded cross-sectional view of the cradle in Fig. 4.

As shown in Figs. 2 to 5, the cradle 2 includes the housing 4, a fixing member 5, a bottom member 8, a movable member 6, and the second connector 71.

In the present embodiment, the housing 4 has an external shape that is a substantially rectangular prism, and has the groove 4A. As shown in Figs. 4 and 5, the housing 4 has an internal space 4M. As shown in Figs. 2 and 3, the housing 4 has an upper surface 4B, a lower surface 4C, a front surface 4D, a back surface 4E, a first side surface 4F, and a second side surface 4G. The upper surface 4B, the lower surface 4C, the front surface 4D, the back surface 4E, the first side surface 4F, and the second side surface 4G define the external shape that is a rectangular prism described above. The housing 4 may have an external shape other than a rectangular prism.

The upper surface 4B and the lower surface 4C extend in the X-direction and the Y-direction. The upper surface 4B and the lower surface 4C are spaced from each other in the Z-direction. The upper surface 4B and the lower surface 4C face away from each other in the Z-direction. The lower surface 4C faces a placement surface in the Z-direction when the housing 4 is placed on, for example, a desk. In the present embodiment, the lower surface 4C has multiple feet 41. Each foot 41 protrudes downward from the lower surface 4C. Each foot 41 is in contact with the placement surface when the housing 4 is placed on, for example, a desk. This creates a clearance between the lower surface 4C and the placement surface when the housing 4 is placed on, for example, a desk.

The front surface 4D and the back surface 4E extend in the Y-direction and the Z-direction. The front surface 4D and the back surface 4E connect the upper surface 4B and the lower surface 4C. The front surface 4D and the back surface 4E are spaced from each other in the X-direction. The front surface 4D and the back surface 4E face away from each other in the X-direction.

The first side surface 4F and the second side surface 4G extend in the X-direction and the Z-direction. The first side surface 4F and the second side surface 4G connect the upper surface 4B and the lower surface 4C. The first side surface 4F and the second side surface 4G connect the front surface 4D and the back surface 4E. The first side surface 4F and the second side surface 4G are spaced from each other in the Y-direction. The first side surface 4F and the second side surface face away from each other in the Y-direction.

The groove 4A is on the upper surface 4B. The groove 4A is recessed downward from the upper surface 4B. The groove 4A extends from the first side surface 4F to the second side surface 4G in the Y-direction. In other words, the groove 4A has two open ends in the Y-direction. The groove 4A is defined by a first facing surface 4H, a second facing surface 4I, and a bottom surface 4J. The second facing surface 4I is an example of a facing surface. The first facing surface 4H and the second facing surface 41 extend downward from the upper surface 4B. The first facing surface 4H and the second facing surface 41 face each other in the X-direction. The bottom surface 4J connects the lower end of the first facing surface 4H and the lower end of the second facing surface 4I. Although the two ends of the groove 4A in the Y-direction are open in the present embodiment as described above, at least one end of the groove 4A in the Y-direction may not be open. In a structure in which, for example, the groove 4A has two ends that are not open in the Y-direction, the surfaces defining the groove 4A include a surface defining one end in the Y-direction and a surface defining the other end in the Y-direction, in addition to the first facing surface 4H, the second facing surface 41, and the bottom surface 4J.

As shown in Figs. 4 and 5, the lower surface 4C has inlets 4K. The inlets 4K are multiple through-holes arranged in the lower surface 4C in the X-direction and the Y-direction. The inlets 4K connect the outside of the housing 4 and the internal space 4M.

The bottom surface 4J has two outlets 4La and 4Lb. Each of the two outlets 4La and 4Lb connects the internal space 4M and the outside of the housing 4. The outlet 4La is at a first-side position in the Y-direction relative to the fixing member 5. The outlet 4Lb is at a second-side position in the Y-direction relative to the fixing member 5.

The inlets 4K and the outlets 4La and 4Lb may have properties such as the shape, the number, the position, and the size other than those shown in Fig. 4.

As shown in Figs. 3 to 5, the fixing member 5 and the bottom member 8 are fixed to the housing 4. The bottom surface 4J of the housing 4 is divided into two portions with a clearance in a middle portion of the housing 4 in the Y-direction. The fixing member 5 and the bottom member 8 are located in this clearance. The fixing member 5 and the bottom member 8 are located between the two outlets 4La and 4Lb in the Y-direction. The bottom member 8 is supported at the back of the lower surface 4C of the housing 4.

The fixing member 5, the bottom member 8, and the housing 4 are separate components. The fixing member 5 is formed from a material with a lower coefficient of friction than the material for the housing 4 adjacent to the fixing member 5. The material for the fixing member 5 is, for example, a resin of polycarbonate (PC) and acrylonitrile butadiene styrene (ABS) with a sliding modifier added. The material for the housing 4 is, for example, a resin of PC and ABS. The fixing member 5 may be molded integrally with the housing 4. The fixing member 5 may be formed from the same material as the housing 4 and be a separate component from the housing 4.

The fixing member 5 includes a support 51 and a protrusion 52. In the present embodiment, the support 51 and the protrusion 52 are integrally molded.

As shown in Figs. 3 to 5, the support 51 is fitted in the clearance between the two portions of the bottom surface 4J. This divides the internal space 4M into three sections, or specifically, sections below the respective two portions of the bottom surface 4J and a section surrounded by the support 51. Although not shown in Figs. 4 and 5, the support 51 has side walls 51A having through-holes. The three sections of the internal space 4M thus connect with one another.

A space 5A is defined between the support 51 and the first facing surface 4H when the support 51 is viewed in the Z-direction. The space 5A extends through the support 51 in the Z-direction. The movable member 6 is located in the space 5A.

The support 51 includes a step 511. The step 511 is located above the other portion of the support 51. The support 51 may not include the step 511.

The protrusion 52 has an end adjacent to the bottom surface 4J supported by the support 51. In other words, the protrusion 52 has a lower end supported by the support 51. In still other words, the support 51 supports the protrusion 52 from a position adjacent to the bottom surface 4J. In the present embodiment, the protrusion 52 is supported on the step 511 in the support 51. The protrusion 52 may be supported on a portion of the support 51 other than the step 511.

As shown in Figs. 2, 4, and 5, the protrusion 52 protrudes upward from the bottom surface 4J. The protrusion 52 has, in the Y-direction intersecting with (perpendicular to in the present embodiment) the X-direction and extending along the bottom surface 4J, two side surfaces 52A each including a boundary surface 52Aa. The boundary surfaces 52Aa are located at boundaries of the side surfaces 52A with the support 51 (the step 511 in the present embodiment). The boundary surfaces 52Aa are inclined with respect to the bottom surface 4J to cause the protrusion 52 to have a larger dimension in the Y-direction toward the step 511 in the Z-direction.

As shown in Figs. 2 and 3, the protrusion 52 is away from the second facing surface 41 in the X-direction. In other words, the protrusion 52 has a clearance 52B between the protrusion 52 and the second facing surface 4I in the X-direction.

As shown in Figs. 2 to 5, the movable member 6 includes a body 61 and a pair of projections 62 and 63.

As shown in Figs 3 and 4, a part of the body 61 is located in the space 5A. A part of the body 61 is located in the section of the internal space 4M surrounded by the support 51. The part of the body 61 not located in the space 5A protrudes upward from the space 5A. In other words, the part of the body 61 not located in the space 5A is located above the bottom surface 4J.

As shown in Fig. 4, the body 61 is supported by a second spring 82 and a third spring 83. The second spring 82 and the third spring 83 are extendable in the Z-direction. The second spring 82 and the third spring 83 each include a lower end connected to the bottom member 8. The second spring 82 and the third spring 83 each have an upper end connected to the body 61. This structure allows the movable member 6 to move in the Z-direction. In the present embodiment, the second spring 82 and the third spring 83 are cylindrical coil springs.

As shown in Figs 3 to 5, the body 61 has an upper surface 61A having a through-hole 61B. The through-hole 61B extends through the body 61 in the Z-direction. The second connector 71 is located in the through-hole 61B.

The pair of projections 62 and 63 protrude upward from the upper surface 61A of the body 61. The pair of projections 62 and 63 protrude upward from the bottom surface 4J.

The pair of projections 62 and 63 are located with the through-hole 61B between them in the Y-direction. In other words, the pair of projections 62 and 63 are located with the second connector 71 between them in the Y-direction.

Each of the pair of projections 62 and 63 includes two slopes facing the other of the pair of projections 62 and 63 in the Y-direction. More specifically, the projection 62 includes a first slope 62A and a second slope 62B facing the projection 63 in the Y-direction, and the projection 63 includes a first slope 63A and a second slope 63B facing the projection 62 in the Y-direction.

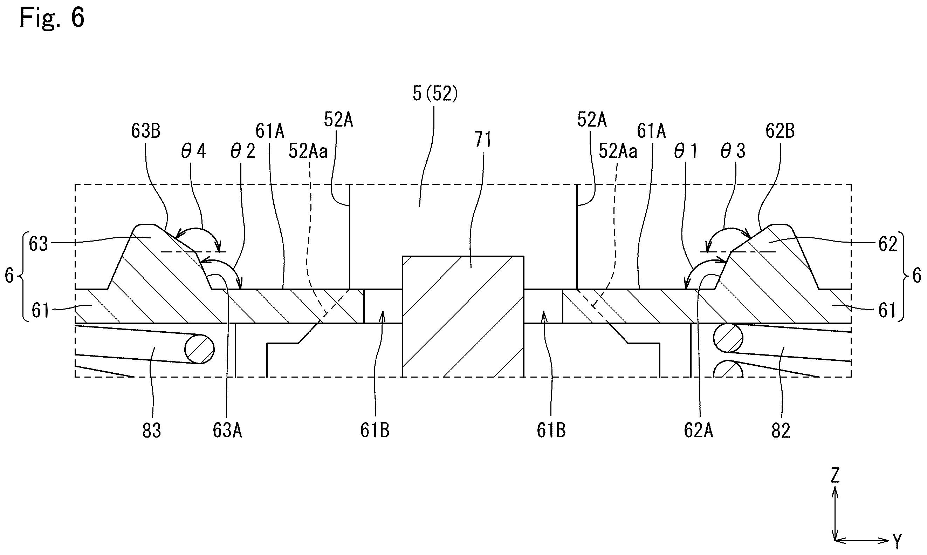

As shown in Figs. 4 to 6, the first slope 62A is located adjacent to a basal end of the projection 62. Fig. 6 is an enlarged view of the portion enclosed by the dashed line in Fig. 4. In other words, the first slope 62A is located in a lower portion of the projection 62. The first slope 62A is inclined at an obtuse angle θ1 with respect to the bottom surface 4J. Similarly, the first slope 63A is located adjacent to a basal end of the projection 63 (in a lower portion of the projection 63). The first slope 63A is inclined at an obtuse angle θ2 with respect to the bottom surface 4J. In the present embodiment, the bottom surface 4J is parallel to the upper surface 61A of the body 61. Thus, the obtuse angles θ1 to θ4 are shown as angles with respect to the upper surface 61A in Fig. 6

The second slope 62B is located adjacent to a distal end of the projection 62 and continuous with the first slope 62A. In other words, the second slope 62B is located adjacent to the upper end of the projection 62 and connected to the first slope 62A. The second slope 62B is inclined at the obtuse angle θ3 with respect to the bottom surface 4J. The obtuse angle 03 of the second slope 62B with respect to the bottom surface 4J is greater than the obtuse angle θ1 of the first slope 62A with respect to the bottom surface 4J. In other words, the second slope 62B is more gently inclined than the first slope 62A.

Similarly, the second slope 63B is located adjacent to a distal end of the projection 63 and continuous with the first slope 63A. In other words, the second slope 63B is located adjacent to the upper end of the projection 63 and connected to the first slope 63A. The second slope 63B is inclined at the obtuse angle θ4 with respect to the bottom surface 4J. The obtuse angle θ4 of the second slope 63B with respect to the bottom surface 4J is greater than the obtuse angle 02 of the first slope 63A with respect to the bottom surface 4J. In other words, the second slope 63B is more gently inclined than the first slope 63A.

As shown in Figs. 3 to 5, the second connector 71 extends through the through-hole 61B in the body 61 of the movable member 6. The portion of the second connector 71 below the through-hole 61B is located in the section of the internal space 4M surrounded by the support 51 in the fixing member 5. The portion of the second connector 71 above the through-hole 61B protrudes upward from the body 61 of the movable member 6.

As shown in Figs. 4 and 5, the second connector 71 is mounted on a board 72 located in the internal space 4M. The board 72 is supported by a support member 73 located in the internal space 4M. The support member 73 is supported by the housing 4 with a first spring 81 and the bottom member 8 located in the internal space 4M between the support member 73 and the housing 4. In the present embodiment, the first spring 81 is a conical spring. The first spring 81 has a lower end connected to the bottom member 8. The first spring 81 has an upper end connected to the support member 73. This structure allows the second connector 71, the board 72, and the support member 73 to move in the Z-direction. The first spring 81 has a smaller dimension than the second spring 82 and the third spring 83 in the Z-direction. In the present embodiment, the first spring 81 is a conical spring. The spring can thus be shorter in the Z-direction than in a structure in which a cylindrical spring supports the second connector 71 while maintaining its stroke length in the Z-direction and its strength. This allows the internal space 4M to be larger in the Z-direction. The first spring 81 may have a dimension larger than or equal to the dimension of each of the second spring 82 and the third spring 83 in the Z-direction. The first spring 81 is not limited to a conical spring, and the second spring 82 and the third spring 83 are not limited to cylindrical coil springs. For example, the first spring 81, the second spring 82, and the third spring 83 may be leaf springs.

The second connector 71 has a smaller dimension than the protrusion 52 on the fixing member 5 in the Y-direction. In other words, the protrusion 52 has a larger dimension than the second connector 71 in the Y-direction. The second connector 71 is located between one end of the protrusion 52 in the Y-direction and the other end of the protrusion 52 in the Y-direction. At least a part of the second connector 71 may not be located between one end of the protrusion 52 in the Y-direction and the other end of the protrusion 52 in the Y-direction.

The structure of the electronic device 3 will now be described. In the structure of the electronic device 3 described below, the X-direction, the Y-direction, and the Z-direction are defined with the electronic device 3 supported by the housing 4 of the cradle 2 (in the state shown in Fig. 1).

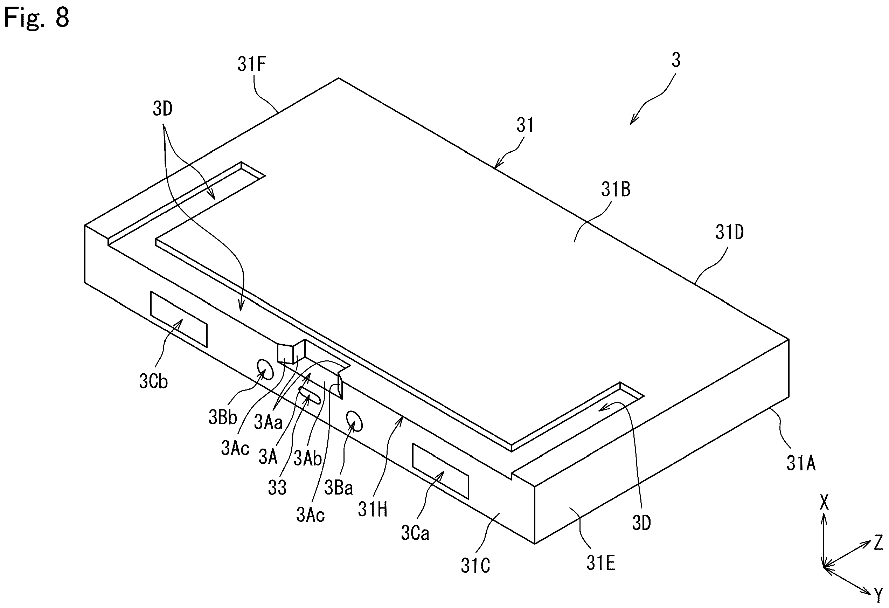

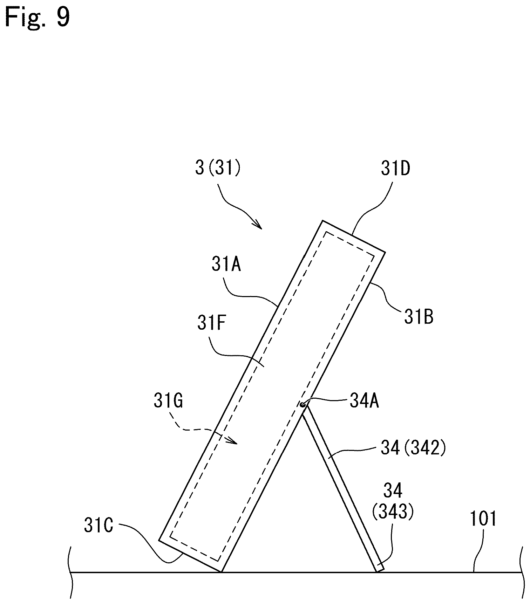

Fig. 7 is a schematic perspective view of the electronic device according to the embodiment of the present disclosure. Fig. 8 is a schematic perspective view of the electronic device in Fig. 7, with a stand removed. Fig. 9 is a schematic side view of the electronic device according to the embodiment of the present disclosure.

As shown in Figs. 1, 7, 8, and 9, the electronic device 3 includes a body 31, a display 32 (refer to Fig. 1), the first connector 33 (refer to Figs. 7 and 8), a stand 34 (refer to Figs. 7 and 9), and controllers 35 (refer to Fig. 1).

As shown in Figs. 7 and 8, the body 31 has an external shape that is a substantially rectangular prism in the present embodiment. The body 31 may have an external shape other than a rectangular prism. As shown in Fig. 9, the body 31 has an internal space 31G.

As shown in Figs. 7 and 8, the body 31 has a front surface 31A, a back surface 31B, and four side surfaces 31C, 31D, 31E, and 31F. The front surface 31A, the back surface 31B, and the four side surfaces 31C, 31D, 31E, and 31F define the external shape of the body 31 that is a rectangular prism. The internal space 31G is surrounded by the front surface 31A, the back surface 31B, and the four side surfaces 31C, 31D, 31E, and 31F.

The front surface 31A and the back surface 31B extend in the Y-direction and the Z-direction. The front surface 31A and the back surface 31B are spaced from each other in the X-direction. The front surface 31A and the back surface 31B face away from each other in the X-direction.

The side surfaces 31C and 31D extend in the X-direction and the Y-direction. The side surfaces 31C and 31D connect the front surface 31A and the back surface 31B. The side surfaces 31C and 31D are spaced from each other in the Z-direction. The side surfaces 31C and 31D face away from each other in the Z-direction.

The side surfaces 31E and 31F extend in the X-direction and the Z-direction. The side surfaces 31E and 31F connect the front surface 31A and the back surface 31B. The side surfaces 31E and 31F connect the side surfaces 31C and 31D. The side surfaces 31E and 31F are spaced from each other in the Y-direction. The side surfaces 31E and 31f face away from each other in the Y-direction.

The body 31 has a recess 3A, two recessed portions 3Ba and 3Bb, two inlets 3Ca and 3Cb, and a recess 3D.

As shown in Fig. 8, the recess 3D recessed in the X-direction is on the back surface 31B. The recess 3D can accommodate the stand 34. The recess 3D thus has a shape corresponding to the stand 34. The recess 3D is open in the Z-direction at a boundary 31H of the recess 3D with the side surface 31C. A part of the recess 3D (the portion of the recess 3D that is open in the Z-direction) receives a pivotally movable distal portion 343 of the stand 34 when the stand 34 is accommodated.

The recess 3A recessed in the X-direction is on the recess 3D. The recess 3A is at the boundary 31H of the recess 3D with the side surface 31C. The recess 3A is open in the back surface 31B and the side surface 31C. More specifically, the recess 3A is open in the back surface 31B in the X-direction, and in the side surface 31C in the Z-direction. In other words, the recess 3A is recessed from the back surface 31B in the X-direction and from the side surface 31C in the Z-direction.

The recess 3A has a chamfered inner edge. Details will be described below. In the present embodiment, the recess 3A has a pair of side surfaces 3Aa facing each other in the Y-direction and a bottom surface 3Ab connecting the pair of side surfaces 3Aa. Each of the pair of side surfaces 3Aa includes a slope 3Ac. The slope 3Ac is a portion of each of the pair of side surfaces 3Aa located at the end of the recess 3A in the Z-direction. Each slope 3Ac is inclined with respect to the Z-direction to allow the recess 3A to flare in the Y-direction toward the side surface 31C in the Z-direction. Each slope 3Ac connects the side surface 31C extending in the Y-direction and the corresponding side surface 3Aa extending in the Z-direction. In the present embodiment, as described above, the recess 3A has a chamfered inner edge with the slopes 3Ac. The inner edge of the recess 3A may not be chamfered.

The recess 3A is not open in the surfaces other than the back surface 31B and the side surface 31C. In other words, the pair of side surfaces 3Aa and the bottom surface 3Ab have, for example, no through-holes. The recess 3A is thus unconnected with the internal space 31G of the body 31. The recess 3A may be connected with the internal space 31G.

The two recessed portions 3Ba and 3Bb are on the side surface 31C. The two recessed portions 3Ba and 3Bb are recessed from the side surface 31C in the Z-direction. The two recessed portions 3Ba and 3Bb are located with the first connector 33 between them in the Y-direction. The recess 3A and the first connector 33 at least partially overlap each other in the X-direction. In other words, at least a part of the recess 3A and at least a part of the first connector 33 are aligned in the X-direction. In the present embodiment, the entire first connector 33 overlaps a part of the recess 3A in the X-direction.

The two inlets 3Ca and 3Cb are in the side surface 31C. The two inlets 3Ca and 3Cb extend through the outer wall of the body 31 including the side surface 31C in the Z-direction. The internal space 31G of the body 31 is thus connected with the outside of the body 31 through the two inlets 3Ca and 3Cb. The two inlets 3Ca and 3Cb are located with the two recessed portions 3Ba and 3Bb between them in the Y-direction. More specifically, the inlet 3Ca and the first connector 33 are located with the recessed portion 3Ba between them in the Y-direction, and the inlet 3Cb and the first connector 33 are located with the recessed portion 3Bb between them in the Y-direction.

The display 32 shown in Fig. 1 is, for example, a liquid crystal display or an organic electroluminescent (EL) display to display images and videos. The display 32 is located on the front surface 31A. The front surface 31A has an opening in a portion other than the outer edge. The display 32 is exposed to the outside of the body 31 through the opening. This allows, for example, images and videos displayed on the display 32 to be viewable from outside the electronic device 3.

As shown in Figs. 7 and 8, the first connector 33 is located on the side surface 31C. The first connector 33 is recessed from the side surface 31C in the Z-direction. The first connector 33 is located between the two recessed portions 3Ba and 3Bb in the Y-direction.

The first connector 33 has a smaller dimension than the recess 3A in the Y-direction. In other words, the recess 3A has a larger dimension than the first connector 33 in the Y-direction. The first connector 33 is located between one end of the recess 3A in the Y-direction and the other end of the recess 3A in the Y-direction. At least a part of the first connector 33 may not be located between one end of the recess 3A in the Y-direction and the other end of the recess 3A in the Y-direction.

As shown in Figs. 7 and 9, the stand 34 is located on the back surface 31B of the body 31. In the present embodiment, the stand 34 is supported on the back surface 31B of the body 31 in a manner pivotable about a pivot axis 34A. The pivot axis 34A is indicated by the imaginary line in Figs. 7 and 9. The body 31 may have a known structure, such as a hinge, to support the stand 34 in a pivotable manner. The stand 34 may be supported by a portion of the body 31 other than the back surface 31B in a pivotable manner. For example, the stand 34 may have its two ends in the Y-direction supported on the side surfaces 31E and 31F of the body 31 in a pivotable manner. The stand 34 may be attachable to and detachable from the body 31, instead of being pivotable, to move between a first orientation and a second orientation (described later).

As shown in Fig. 7, the stand 34 includes a pair of pivotally movable basal portions 341 and 342 and the pivotally movable distal portion 343. Each of the pair of pivotally movable basal portions 341 and 342 extends in the Z-direction. The pivotally movable basal portion 341 is at a first-side position in the Y-direction relative to the first connector 33 (a position adjacent to the recessed portion 3Ba and the inlet 3Ca relative to the first connector 33). The pivotally movable basal portion 342 is at a second-side position in the Y-direction relative to the first connector 33 (a position adjacent to the recessed portion 3Bb and the inlet 3Cb relative to the first connector 33). The pivotally movable basal portions 341 and 342 each include an end adjacent to the side surface 31D in the Z-direction supported by the body 31 in a manner pivotable about the pivot axis 34A.

The pivotally movable distal portion 343 extends in the Y-direction. The pivotally movable distal portion 343 has one end in the Y-direction connected to the end of the pivotally movable basal portion 341 adjacent to the side surface 31C in the Z-direction. The pivotally movable distal portion 343 has the other end in the Y-direction connected to the end of the pivotally movable basal portion 342 adjacent to the side surface 31C in the Z-direction.

The stand 34 is pivotable between the first orientation shown in Fig. 7 and the second orientation shown in Fig. 9. The stand 34 in the first orientation is adjacent to the back surface 31B. The stand 34 in the second orientation is farther from the back surface 31B than in the first orientation. In the present embodiment, the stand 34 in the first orientation is accommodated in the recess 3D (refer to Fig. 8) on the back surface 31B as shown in Fig. 7. When the stand 34 is in the first orientation, the pivotally movable distal portion 343 of the stand 34 is adjacent to the back surface 31B. When the stand 34 is in the first orientation, the pivotally movable distal portion 343 may be in contact with the back surface 31B or with a surface (e.g., the side surface 31C) other than the back surface 31B. When the stand 34 is in the first orientation, the stand 34 may not be in contact with the back surface 31B or another surface such as the side surface 31C. As shown in Fig. 9, when the stand 34 is in the second orientation, the pivotally movable distal portion 343 of the stand 34 is farther from the back surface 31B than when the stand 34 is in the first orientation. When the stand 34 is in the second orientation, the electronic device 3 stands on a placement surface 101 in a self-supporting manner, with the side surface 31C and the pivotally movable distal portion 343 of the stand 34 in contact with the placement surface 101.

As shown in Fig. 7, the pivotally movable distal portion 343 of the stand 34 includes a cover 343A. The cover 343A is a portion of the pivotally movable distal portion 343 of the stand 34 that is at the same position as the recess 3A in the Y-direction. In other words, the cover 343A is included in the pivotally movable distal portion 343. When the stand 34 is in the first orientation, the cover 343A covers at least a part of the recess 3A.

In the present embodiment, the cover 343A has a cutout 343B at a pivotally movable distal end of the pivotally movable distal portion 343. The cutout 343B is cut toward the pivotally movable basal portions 341 and 342 in the Z-direction. The cutout 343B is cut along the chamfered portions of the recess 3A. The cover 343A thus covers, of the portion of the recess 3A open in the back surface 31B, the portion other than the chamfered portions (the portions with the slopes 3Ac). The cover 343A may cover the chamfered portions of the recess 3A. The cover 343A may not have the cutout 343B.

The two controllers 35 shown in Fig. 1 are used to operate the electronic device 3. Each of the two controllers 35 includes, for example, a stick 351 and operation buttons 352 used for operations. Each of the two controllers 35 is attachable to and detachable from the body 31. One of the two controllers 35 is attachable to and detachable from the side surface 31F of the body 31. The other of the two controllers 35 is attachable to and detachable from the side surface 31E of the body 31. The two controllers 35 may be attached to or detached from the body 31 in any known manner, such as fitting or sliding.

The manner in which the cradle 2 supports the electronic device 3 will now be described.

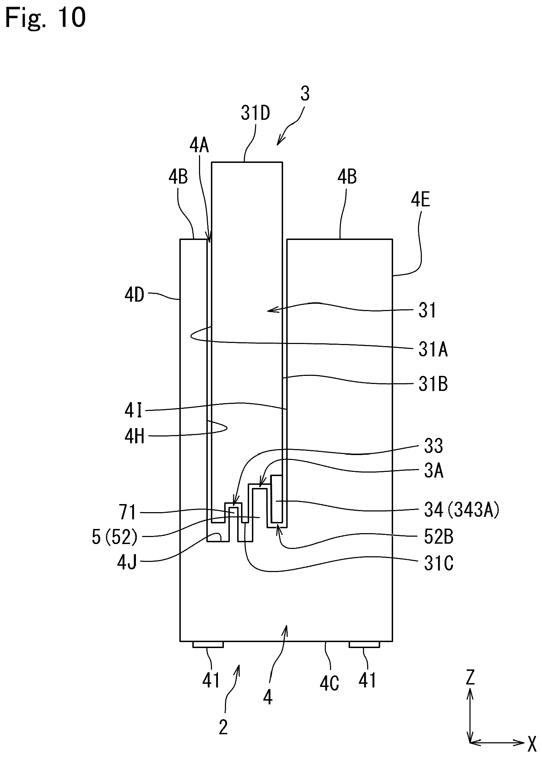

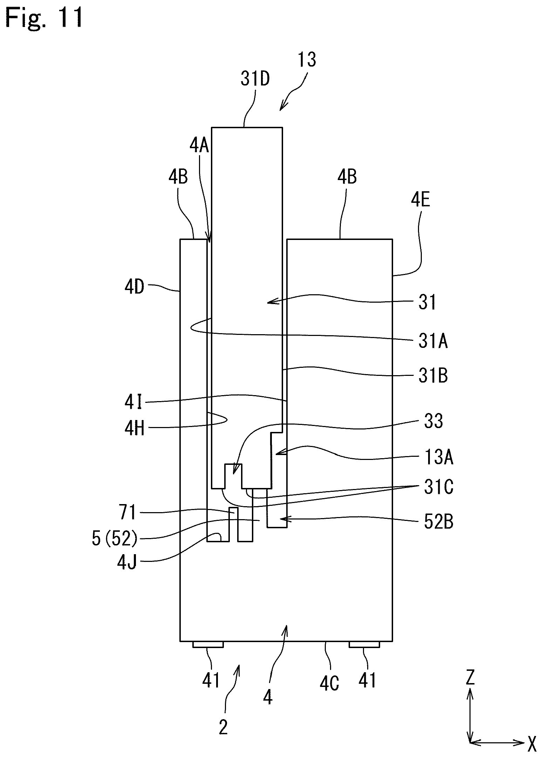

Fig. 10 is a schematic side view of the cradle and the electronic device, illustrating the placement of the electronic device into the cradle. In Fig. 10 as well as Figs. 11 and 12 (described later), the cradle 2 and the electronic device 3 are illustrated in a simplified manner. For example, the housing 4 of the cradle 2 and the fixing member 5 are illustrated integrally in Figs. 10 and 11.

When the electronic device 3 is placed into the groove 4A on the housing 4 of the cradle 2, the cradle 2 supports the electronic device 3 as shown in Fig. 10. When the cradle 2 supports the electronic device 3, the front surface 31A of the electronic device 3 faces the first facing surface 4H of the housing 4 in the X-direction. When the cradle 2 supports the electronic device 3, the back surface 31B of the electronic device 3 faces the second facing surface 4I of the housing 4 in the X-direction.

When the cradle 2 supports the electronic device 3, the side surface 31C of the electronic device 3 faces the bottom surface 4J of the housing 4 in the Z-direction. In this state, the inlet 3Ca of the electronic device 3 and the outlet 4La of the cradle 2 face each other in the Z-direction, and the inlet 3Cb of the electronic device 3 and the outlet 4Lb of the cradle 2 face each other in the Z-direction. This structure allows air to flow into the internal space 4M of the cradle 2 through the inlets 4K of the cradle 2 and then flow into the internal space 4M of the electronic device 3 through the outlets 4La and 4Lb of the cradle 2 and the inlets 3Ca and 3Cb of the electronic device 3.

When the cradle 2 supports the electronic device 3, the display 32 (refer to Fig. 1) of the electronic device 3 faces the first facing surface 4H of the housing 4. In the present embodiment, the display 32 does not display, for example, images and videos, when the electronic device 3 is supported by the housing 4 of the cradle 2.

When the cradle 2 supports the electronic device 3, the second connector 71 of the cradle 2 is placed in the first connector 33 of the electronic device 3. This connects the first connector 33 and the second connector 71. When the cradle 2 supports the electronic device 3, the protrusion 52 on the cradle 2 is placed in the recess 3A on the electronic device 3. In this state, the cover 343A in the stand 34 in the electronic device 3 is in the clearance 52B between the protrusion 52 and the second facing surface 41 in the housing 4.

The connection between the first connector 33 and the second connector 71 and the placement of the protrusion 52 into the recess 3A with the electronic device 3 placed into the cradle 2 will now be described.

When the electronic device 3 is placed into the groove 4A on the housing 4 of the cradle 2, the stand 34 is in the first orientation. In the present embodiment, the stand 34 in the second orientation comes in contact with the upper surface 4B of the housing 4 of the cradle 2, and the electronic device 3 cannot be placed deep into the groove 4A.

When the electronic device 3 is placed into the groove 4A on the housing 4 of the cradle 2, the protrusion 52 is placed into the recess 3A, the projection 62 is placed into the recessed portion 3Ba, and the projection 63 is placed into the recessed portion 3Bb. Thus, the first connector 33 of the electronic device 3 and the second connector 71 of the cradle 2 are aligned with each other in the X-direction and the Y-direction. This allows the first connector 33 and the second connector 71 to guide each other and be connected to each other.

When the protrusion 52 is placed into the recess 3A, the cover 343A in the stand 34 in the electronic device 3 is placed into the clearance 52B between the protrusion 52 and the second facing surface 4I in the housing 4 of the cradle 2. When the protrusion 52 is placed in the recess 3A, the protrusion 52 is between the cover 343A and the bottom surface 3Ab of the recess 3A in the X-direction.

The pair of projections 62 and 63 are tapered. Thus, when the electronic device 3 is slightly misaligned with the cradle 2 in the Y-direction, the first slopes 62A and 63A and the second slopes 62B and 63B of the pair of projections 62 and 63 guide the recessed portions 3Ba and 3Bb to correct the misalignment. The movable member 6 with the pair of projections 62 and 63 is not fixed to the housing 4, and can thus correct the misalignment easily.

When the electronic device 3 is placed further into the groove 4A, the movable member 6 is pushed downward by the electronic device 3 to move downward against urging forces from the second spring 82 and the third spring 83. This causes the second connector 71 to have a greater upward protruding length from the movable member 6 and be placed into the first connector 33. The second connector 71, which has been aligned with the first connector 33, has less misalignment with respect to the first connector 33, and is thus smoothly placed into the first connector 33.

When the electronic device 3 is placed further into the groove 4A, the second connector 71 is pushed downward by the electronic device 3 to move downward against an urging force from the first spring 81. This urges the second connector 71 upward, thus connecting the second connector 71 to the first connector 33 more firmly.

When the electronic device 3 is placed into the groove 4A on the housing 4 of the cradle 2, the cradle 2 supports the electronic device 3 as described above.

In this state, the protrusion 52 is in the recess 3A, and the cover 343A in the stand 34 in the first orientation is in the clearance 52B between the protrusion 52 and the second facing surface 4I in the housing 4. In this state, the protrusion 52 is between the cover 343A and the bottom surface 3Ab of the recess 3A in the X-direction.

In this state, the projection 62 is in the recessed portion 3Ba, and the projection 63 is in the recessed portion 3Bb.

In this state, the first connector 33 and the second connector 71 are connected to each other. This electrically connects the electronic device 3 and the cradle 2.

As described above, the electronic device 3 is placeable into the cradle 2 in an appropriate state, and the cradle 2 can support the electronic device 3, as shown in Fig. 10. The appropriate state in this example refers to a state in which the protrusion 52 is in the recess 3A, the projections 62 and 63 are in the respective recessed portions 3Ba and 3Bb, and the first connector 33 and second connector 71 are connected to each other.

Fig. 11 is a schematic side view of the cradle and an electronic device, illustrating the placement of the electronic device into the cradle. In Fig. 11, an electronic device 13 having a structure different from that of the electronic device 3 is placed into the cradle 2.

The electronic device 13 differs from the electronic device 3 in that the electronic device 13 has a recess 13A in place of the recess 3A and in that the recess 13A is not covered by a stand. Not covered by a stand, the recess 13A is closer to the back surface 31B than the recess 3A in the X-direction.

The electronic device 13 cannot be placed into the cradle 2 in the appropriate state due to the difference described above. With the recess 13A of the electronic device 13 and the protrusion 52 on the cradle 2 not aligned in the X-direction, the side surface 31C of the electronic device 13 hits the protrusion 52 when the electronic device 13 is placed into the cradle 2. This prevents the electronic device 13 from being placed further into the groove 4A on the cradle 2. The protrusion 52 is thus not placed into the recess 13A, and the first connector 33 and the second connector 71 are not connected to each other. Although not shown in Fig. 11, the projections 62 and 63 are not placed into the respective recessed portions 3Ba and 3Bb.

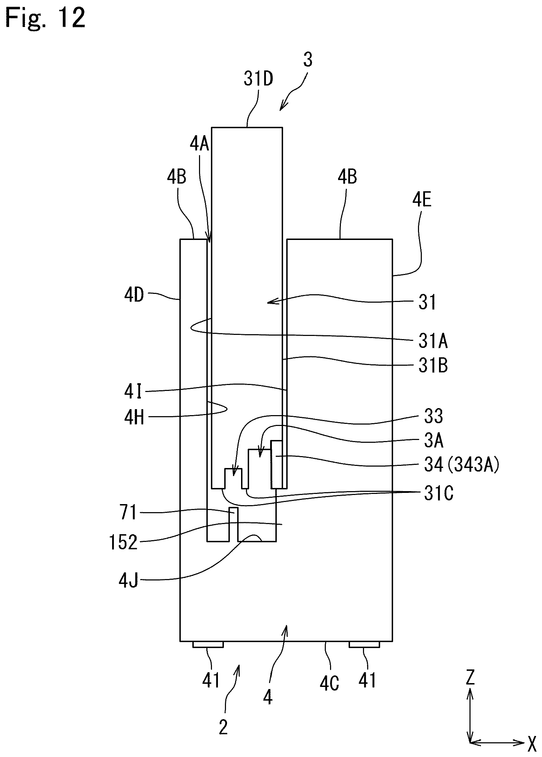

Fig. 12 is a schematic side view of a cradle and the electronic device, illustrating the placement of the electronic device into the cradle. In Fig. 12, the electronic device 3 is placed into a cradle 12 having a structure different from that of the cradle 2.

The cradle 12 differs from the cradle 2 in that the cradle 12 includes a protrusion 152 in place of the protrusion 52. The protrusion 152 has no clearance between the protrusion 152 and the second facing surface 4I in the X-direction. This differs from the protrusion 52 on the cradle 2 located away from the second facing surface 41 in the X-direction (in other words, located with the clearance 52B between the protrusion 52 and the second facing surface 41).

The electronic device 3 cannot be placed into the cradle 12 in the appropriate state due to the difference described above. With no clearance 52B between the protrusion 152 and the second facing surface 41 in the X-direction, the cover 343A in the stand 34 in the electronic device 3 hits the protrusion 152 when the electronic device 3 is placed into the cradle 12. This prevents the electronic device 3 from being placed further into the groove 4A on the cradle 12. The protrusion 152 is thus not placed into the recess 3A, and the first connector 33 and the second connector 71 are not connected to each other. Although not shown in Fig. 12, the projections 62 and 63 are not placed into the respective recessed portions 3Ba and 3Bb.

The cradle 2 can produce the effects described below.

In a device holding system described in Patent Document 1, when a device holder (corresponding to the cradle 2) holds an electronic device, a guide protrusion (corresponding to the protrusion 52) on the device holder is fitted in a cutout portion (corresponding to the recess 3A) in the electronic device (corresponding to the electronic device 3). This positions the electronic device with respect to the device holder in the lateral direction (corresponding to the Y-direction), and connects a male connector (corresponding to the second connector 71) included in the device holder to a female connector (corresponding to the first connector 33) included in the electronic device at the same time.

In the device holding system described in Patent Document 1, the cutout portion in the electronic device is open rearward. This may cause misalignment of the electronic device with respect to the device holder in the front-rear direction (corresponding to the X-direction) when the guide protrusion on the device holder is fitted in the cutout portion.

In the present embodiment, the protrusion 52 on the cradle 2 is in the recess 3A on the electronic device 3 when the cradle 2 supports the electronic device 3.

In this state, the cover 343A in the pivotally movable distal portion 343 of the stand 34 in the first orientation in the electronic device 3 is in the clearance 52B between the protrusion 52 on the cradle 2 and the second facing surface 41 in the X-direction. In other words, the protrusion 52 on the cradle 2 is between the bottom surface 3Ab of the recess 3A on the electronic device 3 and the cover 343A in the X-direction. This reduces misalignment of the protrusion 52 in the recess 3A in the X-direction.

In this state, the protrusion 52 on the cradle 2 is between, of the surfaces defining the recess 3A on the electronic device 3, the pair of side surfaces 3Aa facing in the Y-direction. This reduces misalignment of the protrusion 52 in the recess 3A in the Y-direction.

In the present embodiment, the pair of projections 62 and 63 on the cradle 2 are placed in the respective two recessed portions 3Ba and 3Bb of the electronic device 3 when the cradle 2 supports the electronic device 3. This positions the electronic device 3 with respect to the cradle 2. This can reduce misalignment when the second connector 71 located between the pair of projections 62 and 63 is connected to the first connector 33 of the electronic device 3.

For the side surface 31C of the body 31 of the electronic device 3 having non-flat portions (e.g., the inlets 3Ca and 3Cb), the pair of projections 62 and 63 of the cradle 2 may be caught on the non-flat portions on the side surface 31C while being placed into the respective two recessed portions 3Ba and 3Bb of the electronic device 3, and may be prevented from being placed into the respective two recessed portions 3Ba and 3Bb.

In the present embodiment, the pair of projections 62 and 63 respectively have the first slopes 62A and 63A adjacent to their basal ends, and respectively have the second slopes 62B and 63B adjacent to their distal ends. When the non-flat portions on the side surface 31C come in contact with the pair of projections 62 and 63, the non-flat portions on the side surface 31C come in contact with the second slopes 62B and 63B before coming in contact with the first slopes 62A and 63A. The second slopes 62B and 63B have greater angles with respect to the bottom surface 4J than the first slopes 62A and 63A. This allows the non-flat portions to easily move along the second slopes 62B and 63B when the non-flat portions on the side surface 31C come in contact with the pair of projections 62 and 63. In other words, this reduces the likelihood that the pair of projections 62 and 63 are caught on the non-flat portions on the side surface 31C.

In the present embodiment, the boundary surfaces 52Aa increase the strength of a boundary of the protrusion 52 with the support 51.

When the electronic device 3 is moved with the protrusion 52 in contact with the body 31 of the electronic device 3 while being placed into the cradle 2, one of the protrusion 52 or the body 31 may undergo, for example, wear, separation of the coating, or breakage under a force from the other of the protrusion 52 or the body 31. In the present embodiment, the protrusion 52 is a separate component from the housing 4, and the material for the protrusion 52 has a lower coefficient of friction than the material for the housing 4. Thus, when the electronic device 3 is moved with the protrusion 52 in contact with the body 31 of the electronic device 3, the protrusion 52 easily slides against the body 31. This reduces the likelihood that the protrusion 52 and the body 31 undergo, for example, wear, separation of the coatings, or breakage.

In the present embodiment, the cradle 2 includes the protrusion 52 having a larger dimension than the second connector 71 in the Y-direction. The second connector 71 is connected to the first connector 33 of the electronic device 3. The protrusion 52 thus typically has a larger dimension than the first connector 33 in the Y-direction. This reduces the likelihood that the protrusion 52 is accidentally connected to the first connector 33 when the electronic device 3 is supported by the cradle 2.

The electronic device 3 can produce the effects described below.

In the present embodiment, the cover 343A covers at least a part of the portion of the recess 3A open in the back surface 31B when the stand 34 is in the first orientation. This structure allows the stand 34 to easily pivot from the first orientation to the second orientation when, for example, a user places a finger in the recess 3A and pulls the stand 34 toward the user.

In the present embodiment, the protrusion 52 on the cradle 2 is in the recess 3A on the electronic device 3 when the cradle 2 supports the electronic device 3. In this state, the cover 343A in the pivotally movable distal portion 343 of the stand 34 in the first orientation covers at least a part of the protrusion 52 in the recess 3A. The cover 343A thus reduces misalignment of the protrusion 52 in the recess 3A in the X-direction.

In the present embodiment, the recess 3A has, for example, no through-holes to connect the recess 3A with the internal space 31G. This prevents the protrusion 52 placed in the recess 3A from being caught on, for example, a through-hole.

In the present embodiment, the electronic device 3 has the recess 3A having a larger dimension than the first connector 33 in the Y-direction. The protrusion 52 on the cradle 2 is placed in the recess 3A. The protrusion 52 thus typically has a larger dimension than the first connector 33 in the Y-direction. This reduces the likelihood that the protrusion 52 is accidentally connected to the first connector 33 when the electronic device 3 is supported by the cradle 2.

In the present embodiment, when the protrusion 52 on the cradle 2 is placed into the recess 3A, the protrusion 52 is guided into the recess 3A along the slopes 3Ac that are the chamfered portions of the inner edge of the recess 3A. This reduces the likelihood that the protrusion 52 is caught on the recess 3A when the protrusion 52 is placed into the recess 3A.

### (Modifications)

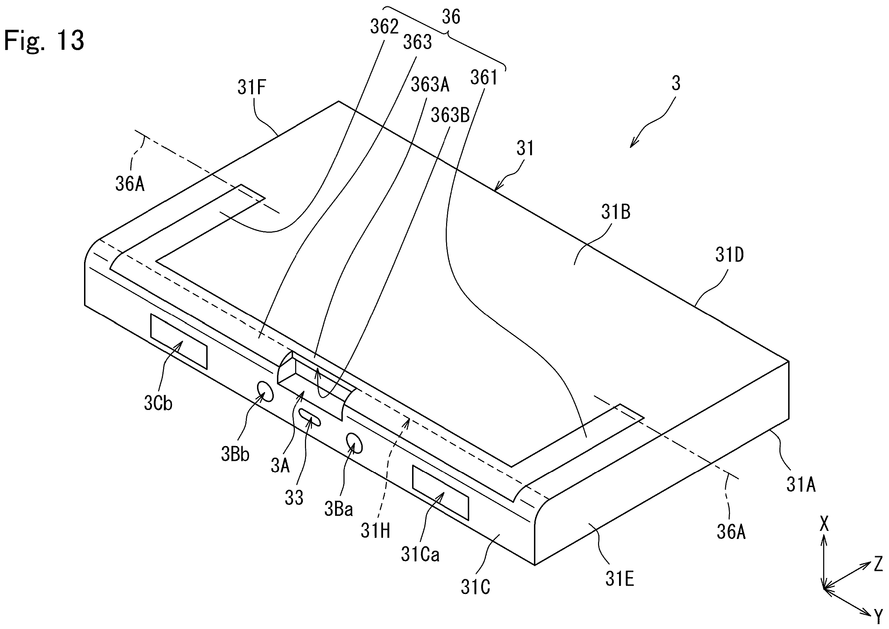

The present invention is not limited to the above embodiment and may be implemented in various manners. For example, the boundary 31H of the body 31 of the electronic device 3 may be curved as shown in Fig. 13. For example, the electronic device 3 may include a stand 36 in place of the stand 34. Fig. 13 is a schematic perspective view of an electronic device according to a modification of the embodiment of the present disclosure.

The stand 36 includes a pivot axis 36A, pivotally movable basal portions 361 and 362, a pivotally movable distal portion 363, a cover 363A, and a cutout 363B respectively corresponding to the pivot axis 34A, the pivotally movable basal portions 341 and 342, the pivotally movable distal portion 343, the cover 343A, and the cutout 343B in the stand 34. For example, the cutout 363B is cut toward the pivotally movable basal portions 361 and 362 in the Z-direction, similarly to the cutout 343B. Similarly to the stand 34, the stand 36 pivots about the pivot axis 36A between the first orientation and the second orientation.

In the structure shown in Fig. 13, when the stand 36 is in the first orientation, a part of the pivotally movable distal portion 363 covers the side surface 31C of the body 31. In this case, when the stand 36 is in the first orientation, the pivotally movable distal portion 363 is adjacent to the side surface 31C in addition to the back surface 31B. In the structure shown in Fig. 13, the cutout 363B in the pivotally movable distal portion 363 overlaps the recess 3A when viewed in the Z-direction perpendicular to the side surface 31C. The recess 3A can thus avoid having at least a part of its opening covered by the pivotally movable distal portion 363. The recess 3A can thus avoid having a smaller opening.

When the pivotally movable distal portion 363 does not have the cutout 363B, the pivotally movable distal portion 363 overlaps the recess 3A when viewed in the Z-direction. In this case, the thickness (in other words, the dimension in the X-direction) of the side surface 31C of the electronic device 3 is to be greater by the overlap between the pivotally movable distal portion 363 and the recess 3A.

In the present modification, the cutout 363B in the pivotally movable distal portion 363 overlaps the recess 3A when viewed in the Z-direction perpendicular to the side surface 31C. In other words, the cutout 363B in the pivotally movable distal portion 363 is a part of the recess 3A. Thus, the thickness of the side surface 31C of the electronic device 3 is not to be greater, unlike in a structure in which the pivotally movable distal portion 363 does not have the cutout 363B. In other words, this structure can avoid an increase in the thickness of the electronic device 3.

### EXPLANATION OF REFERENCES

- 2: cradle
- 3: electronic device
- 3A: recess
- 3Ac: slope
- 3Ba: recessed portion
- 3Bb: recessed portion
- 31: body
- 31A: front surface
- 31B: back surface
- 31C: side surface
- 31G: internal space
- 31H: boundary
- 32: display
- 33: first connector
- 34: stand
- 343: pivotally movable distal portion
- 343A: cover
- 343B: cutout
- 4: housing
- 41: second facing surface (facing surface)
- 4J: bottom surface
- 51: support
- 52: protrusion
- 52A: side surface
- 52Aa: boundary surface
- 52B: clearance
- 62: projection
- 62A: first slope
- 62B: second slope
- 63: projection
- 63A: first slope
- 63B: second slope
- 71: second connector

## Claims

1. . A cradle for supporting an electronic device, the electronic device including a body having a front surface, a back surface spaced from the front surface and facing away from the front surface, a side surface connecting the front surface and the back surface, and a recess located at a boundary between the back surface and the side surface and being open in the back surface and the side surface, a display on the front surface, a first connector on the side surface, and a stand on the back surface, the stand being movable between a first orientation in which the stand is adjacent to the back surface and a second orientation in which the stand is farther from the back surface than in the first orientation, the stand including a cover to cover at least a part of the recess when the stand is in the first orientation, the cradle comprising:
a second connector connectable to the first connector of the electronic device being supported by the cradle;
a housing having a facing surface to face, in a depth direction, the back surface of the body of the electronic device being supported by the cradle, and a bottom surface to face the side surface of the electronic device being supported by the cradle; and
a protrusion protruding from the bottom surface and located away from the facing surface in the depth direction,
wherein when the cradle supports the electronic device, the protrusion is in the recess on the body of the electronic device and the cover in the stand in the first orientation in the electronic device is in a clearance between the protrusion and the facing surface in the depth direction.

2. . The cradle according to claim 1, further comprising:
a pair of projections protruding from the bottom surface, the pair of projections being placeable in respective two recessed portions on the side surface of the body of the electronic device being supported by the cradle,
wherein the pair of projections are located with the second connector between the pair of projections in a width direction intersecting with the depth direction and extending along the bottom surface,
each of the pair of projections includes a first slope and a second slope facing the other of the pair of projections in the width direction,
the first slope of each of the pair of projections is located adjacent to a basal end of a corresponding projection of the pair of projections and is inclined at an obtuse angle with respect to the bottom surface,
the second slope of each of the pair of projections is located adjacent to a distal end of a corresponding projection of the pair of projections, is continuous with the first slope of the corresponding projection, and is inclined at an obtuse angle with respect to the bottom surface, and
the second slope has a greater angle with respect to the bottom surface than the first slope.

3. . The cradle according to claim 1 or claim 2, further comprising:
a support supporting the protrusion from a position adjacent to the bottom surface,
wherein the protrusion has two side surfaces in a width direction intersecting with the depth direction and extending along the bottom surface, and each of the two side surfaces includes, at a boundary of the side surface with the support, a boundary surface inclined with respect to the bottom surface to cause the protrusion to have a larger dimension in the width direction toward the support.

4. . The cradle according to claim 1 or claim 2, wherein
the protrusion is a separate component from the housing, and
a material for the protrusion has a lower coefficient of friction than a material for the housing adjacent to the protrusion.

5. . The cradle according to claim 1 or claim 2, wherein
the protrusion has a larger dimension than the second connector in a width direction intersecting with the depth direction and extending along the bottom surface.

6. . An electronic device supportable by a cradle, the electronic device comprising:
a body having a front surface, a back surface spaced from the front surface and facing away from the front surface, a side surface connecting the front surface and the back surface, and a recess located at a boundary between the back surface and the side surface and being open in the back surface and the side surface;
a display on the front surface;
a first connector on the side surface; and
a stand on the back surface, the stand being movable between a first orientation in which the stand is adjacent to the back surface and a second orientation in which the stand is farther from the back surface than in the first orientation, the stand including a cover to cover at least a part of the recess when the stand is in the first orientation,
wherein when the electronic device is supported by the cradle, the first connector is connected to a second connector included in the cradle, the recess receives a protrusion included in the cradle, and the cover in the stand in the first orientation covers at least a part of the protrusion in the recess.

7. . The electronic device according to claim 6, wherein
the body has an internal space, and
the recess is unconnected with the internal space.

8. . The electronic device according to claim 6 or claim 7, wherein
the stand includes a pivotally movable distal portion to be adjacent to the side surface when the stand is in the first orientation,
the pivotally movable distal portion has a cutout cut toward a pivotally movable basal portion of the stand, and
the cutout overlaps the recess when viewed in a direction perpendicular to the side surface.

9. . The electronic device according to claim 6 or claim 7, wherein the recess has a larger dimension than the first connector in a width direction intersecting with the front surface and extending along the side surface.

10. . The electronic device according to claim 6 or claim 7, wherein the recess has a chamfered inner edge.
